## Europäisches Patentamt
## European Patent Office
## Office européen des brevets

(19)

(11) Publication number: **0 198 313**
**B1**

(12)

# EUROPEAN PATENT SPECIFICATION

(45) Date of publication of the patent specification:
21.03.90

(51) Int. Cl.⁴: **B60G 3/28,** B60G 11/00,
B60G 7/02, B60G 21/04

(21) Application number: 86104426.1

(22) Date of filing: 01.04.86

(54) Frame type flexible axle suspension system.

(30) Priority: 01.04.85 CN 85101438

(43) Date of publication of application:
22.10.86 Bulletin 86/43

(45) Publication of the grant of the patent:
21.03.90 Bulletin 90/12

(84) Designated Contracting States:
FR GB IT

(73) Proprietor: Tang, Jinsheng, No. B. 13 West, Jingwangfen Ganjiakou Beijing(CN)

(72) Inventor: Tang, Jinsheng, No. B. 13 West, Jingwangfen Ganjiakou Beijing(CN)

(74) Representative: Lederer, Franz, Dr. et al, Van der Werth, Lederer & Riederer Patentanwälte Lucile-Grahn-Strasse 22, D-8000 München 80(DE)

(56) References cited:
DE-A- 3 131 036
DE-A- 3 302 627
FR-A- 1 293 498
FR-A- 1 559 705
FR-A- 2 005 243
US-A- 2 553 746
US-A- 3 975 083
US-A- 3 992 036

STAHLSCHLÜSSEL, 1983, page 42, Verlag Stahlschlüssel Wegst GmbH, Marbach, DE

ACTORUM AG

## Description

The present invention relates to a frame type flexible axle suspension system used as an independent suspension system in a drive system of a motor vehicle, or an automobile in particular.

It is well known that the suspension system is one of the important subassemblies of a modern automobile. It consists of elastic elements, buffer, guiding mechanism and stabilizing rod. The suspension system greatly affects smoothness and stability of drive of an automobile, and also has influence on many performance features of an automobile, such as roadability, fuel economy etc. Therefore, improvements and patent applications on suspension systems have been proposed and submitted again and again. Presently there exists a great variety of types of suspension systems. According to the form of guiding mechanism they can be classified into two groups: dependent and independent suspension systems. Independent suspension systems can be further classified into a number of types. Up to now the following types have been developed: dual cross arm type, single cross arm type, longitudinal arm type, single oblique arm type and sliding column with swinging arm type.

There is one common feature among all above mentioned independent suspension systems, that is, various functions of a suspension system, such as guiding, buffering, shock absorbing and stabilizing functions, are performed by separate related mechanisms or elements. These mechanisms and elements are then combined together to form an integral suspension system. Based on this principle of thoughts people focused their attention on improving the suspension systems. The problem of coordinating the improved mechanism with the whole suspension to form an integral unit was considered afterwards. For example, in order to improve the guiding function of a suspension, only the guiding mechanism of the suspension was improved, thus single and dual arm types were developed.

Thus, an independent suspension system for a motor vehicle as stated in the prior art portion of claim 1 is known (US-A 3 992 036), having curved spring steel rods which over most of the length thereof run mutually parallel and consist of a torsion bar part, a loop and a strut portion directed almost perpendicularly to the torsion rod portion and terminating in a link stand which is further connected to two suspension arms, the connection to both strut portions being via one of the suspension bars. Thus, the construction of the suspension system is rather complex consisting of several components which respectively perform the different functions of the system; thus, guiding function is realized by the suspension arms, buffering function and stabilizing function are realized by the curved rods.

Such kind of principle of thoughts brings about a lot of problems for the suspension system:

(1) The suspension system is relatively complex due to the fact that it is combined from a number of mechanisms or elements;

(2) Therefore, there are more connecting elements in the suspension system.

(3) There is a big difference between front and rear suspension constructions.

The above mentioned constructional problems result in a larger amount of work during manufacturing process, cause trouble and inconvenience in assembly and maintenance, and at the same time constitute one of the reasons for the high cost of automobiles.

The objective of the present invention is to propose a totally new and unique independent suspension system, that is, a frame type flexible axle suspension system. It integrates guiding, stabilizing, buffering functions and hinges of a suspension system into a simplified frame construction. The coming out of this suspension system solves the above mentioned problems which exist in suspension systems used at present.

The frame type flexible axle suspension system of the present invention includes two parallel shafts made of spring steel. The ends of these shafts pass through a pair of link stands which are perpendicular to the spring steel shafts, thus form a frame construction. Each link stand is connected with an elevation shaft or a driving shaft or a wheel shaft. Four elastic sleeves are fixed on the spring steel shafts by hoops. Supporting stands are connected with the hoops and are fixed on the chassis of an automobile. Here the elastic sleeves can stand both the normal pressure in the tangent direction and the shearing force in the traverse direction, and thus ensure a secure connection of the suspension system with the vehicle body.

This unique suspension system is of a simple frame construction. It combines guiding, buffering and stabilizing functions of prior art complex suspension systems in a simplified system. Moreover, it has the following effects: the manufacturing process of the suspension elements is simplified, the amount of parts, especially connecting elements such as hinges, is decreased, assembly and maintenance becomes easier, and break down rate is lowered.

This independent suspension system makes it possible to use basically common construction for front and rear axle suspension. Therefore, it further simplifies manufacturing process, reduces the amount of assembly work, at the same time favours repair and maintenance work.

Moreover, shapes and sizes of parts in this construction, as well as their relative positions can be adjusted in a certain range. This helps to find an ideal combination of parameters, thus it can conveniently satisfy different requirements on suspension functions for different vehicles. Therefore, this suspension system can be considered as a flexible suspension system which can be adjusted flexibly and conveniently to satisfy requirements of vehicles of various different types.

Hereunder is detailed description together with attached drawings of the present invention.

Fig. 1 is a bottom view of a down supporting type front drive flexible axle suspension system.

Fig. 2 is a front view of the down supporting type front drive flexible axle suspension system.

Fig. 3 is a view in direction B of Fig. 2.

Fig. 4 is a bottom view of an upper suspending type front drive flexible axle suspension system.

Fig. 5 is a front view of the upper suspending type front drive flexible axle suspension system.

Fig. 6 is a front view of the right half of a sliding arm type front drive front flexible axle suspension system.

Fig. 7 is a view in direction A of Fig. 6.

Fig. 8 is a top view of the left half of a rear drive rear flexible axle suspension system.

Fig. 9 is a view in direction A of Fig. 8.

Fig. 10 is a bottom view of a passive type rear flexible axle suspension system.

Fig. 11 is a front view of the passive type rear flexible axle suspension system.

Fig. 12 is a top view of link stands of a front axle.

Fig. 13 is a view of A–A section of Fig. 12.

Fig. 14 is a structural schema of link stands.

Fig. 15 is a structural schema of link stands.

Fig. 16 is a structural schema of link stands.

Fig. 17 is a structural schema of elastic sleeves, hoops and supporting stands.

Fig. 18 is a view of A–A section of Fig. 17.

Fig. 19 is a top view of Fig. 17.

Requirements to various components are described separately together with the attached drawings as follows.

A flexible axle suspension system of an automobile comprises a frame construction (10) of two parallel spring steel shafts (12, 14). The material of the spring steel shafts (12, 14) is very important. Spring steel with good mechanical characteristics and high elasticity strength, such as manganese steel and silicon manganese steel, are to be selected. In particular, spring steel 65Mn and 60 (Si$_2$Mn) are more commonly used materials.

Shape, section size and length of spring steel shafts (12, 14) are to be selected based on differences in type, construction and loading capacity of the automobile. In one and the same frame construction (10), the two spring steel shafts (12, 14) must meet the requirement of parallelism. However, shapes, section sizes and lengths may be indentical or not identical. Depending on specific design specification, it can be adjusted in a certain range. The sections of the steel shafts may have various forms, such as round, oval, square, rectangle etc. If the spring steel shafts (12, 14) have round sections, then for a mini-automobile their diameter should not be less than 8 mm. For an ordinary car or a passenger-cargo dual purpose truck their diameter should be more than 20 mm.

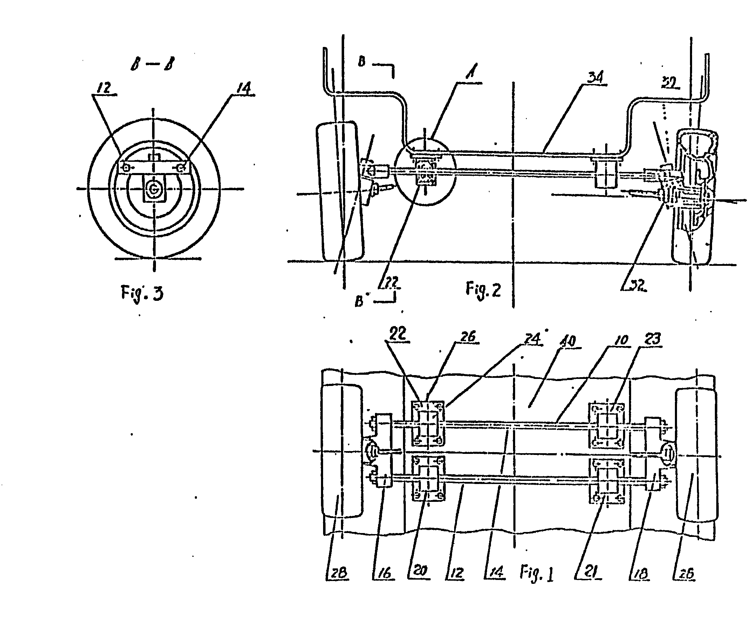

Both ends of the spring steel shafts (12, 14) are to pass through respective individually conic holes of a pair of link stands (16 and 18) which are perpendicular to the steel shafts to form the frame construction (10) (see Fig. 1). The steel shafts should be firmly connected with the link stands. There should not be any traverse displacement between them.

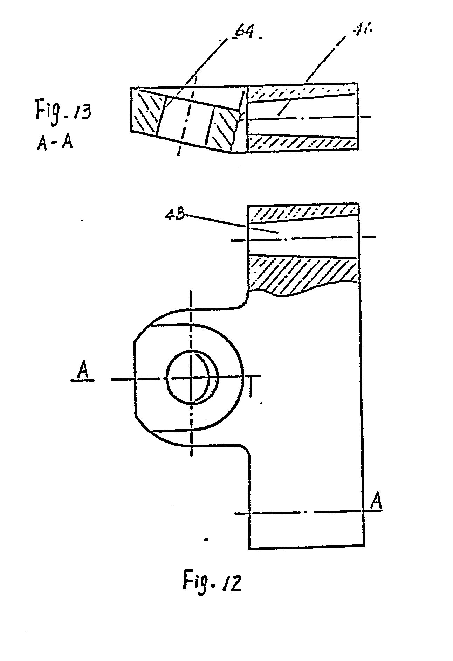

For example, at the end of the spring steel shaft there may be a fine thread followed by a conic transition part, the conicity of which should match with the conicity of holes (48, 50) (Fig. 12–16) on the link stands. Then the steel shafts are fixed on the link stands by nuts.

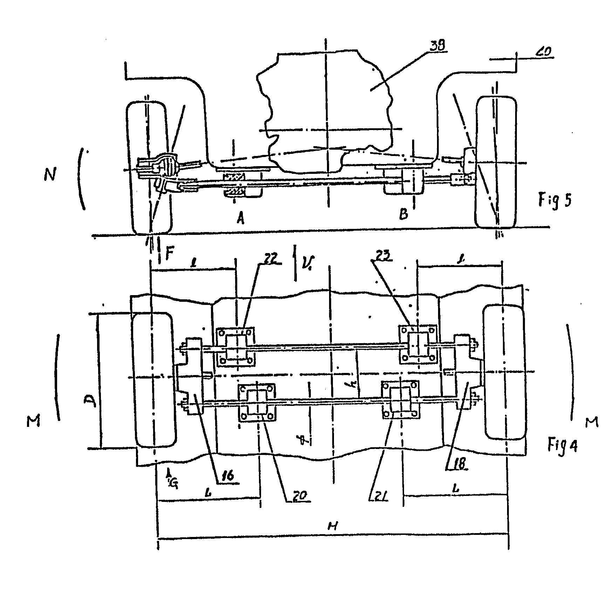

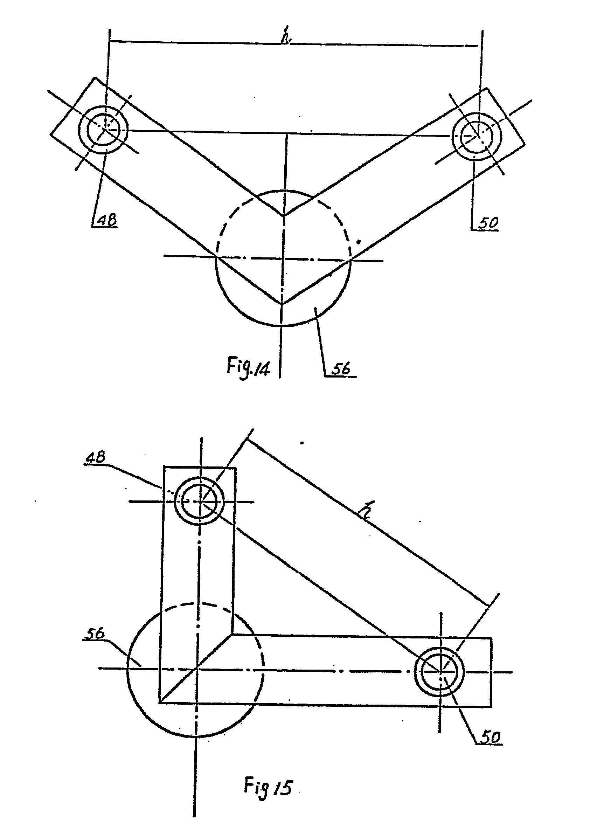

The distance h (see Fig. 4) between both parallel spring steel shafts (12) and (14) in the frame construction (10), i.e. the distance h (see Fig. 14, 15, 16) between the centers of the two holes in the link stands, through which the steel shafts are to pass, should be selected according to the vehicle body structure. The distance between the two parallel steel shafts should not be less than one fifth of the wheel diameter D, that is h≥1/5D.

In brief, by changing the shape, section size and length of each of the two spring steel shafts (12, 14) and the distance between them is possible to change the guiding feature, natural frequency and stability of this suspension system, thus to find an ideal combination of parameters to meet compound requirements to the suspension system of a certain kind of automobile. Due to the fact that this suspension system is merely a simple frame construction, such adjustment is relatively easy and simple.

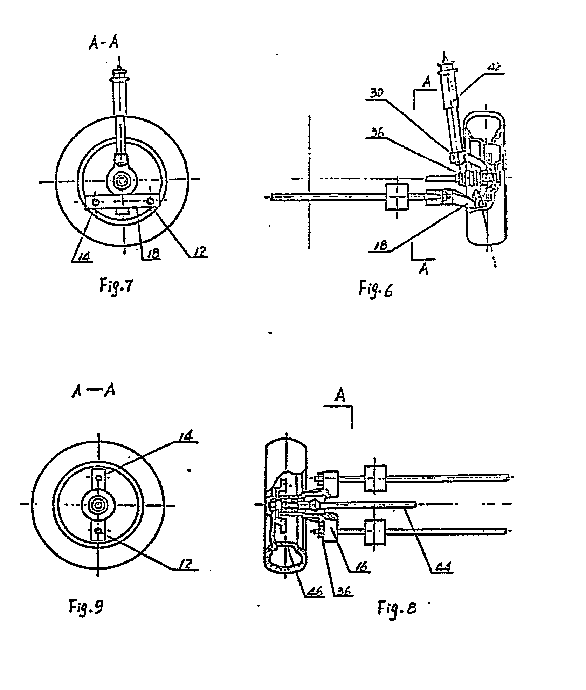

The link stands (16, 18) play an important role in the flexible axle suspension system of the automobile. They not only connect the spring steel shafts (12, 14) to form the frame construction (10), but also connect the suspension system with a drive shaft (32 or 44) (Fig. 2, 8) or an elevation shaft (30) (Fig. 6) or a wheel shaft (62) (Fig. 11), thus they constitute an important part of the chassis of the automobile.

The link stands (16, 18) are perpendicular to the spring steel shafts (12, 14) and are disposed at both ends of this pair of steel shafts. They are integrated with the steel shafts by fasteners, thus the frame construction (10) is formed to be rigid. The link stands are essentially plate stands (see Fig. 12, 13). Mainly, in the link stands there are the two conic holes (48, 50) for the spring steel shafts (12, 14) to pass therethrough, and a connecting part (56) (Fig. 14–16) is provided for the drive shaft (32 or 44) or the elevation shaft (30) or the wheel shaft (62) to be connected. The conic holes match with the conic parts of the spring steel shaft ends. At the ends of the steel shafts there are sections whith fine threads, right next to the above mentioned conic parts of the steel shafts. Thus, it is possible to integrate the steel shafts with the link stands by fasteners such as nuts.

Shape and size of the link stands may be adjusted according to the requirements. By making appropriate changes in shape and size of the link stands according to the specific difference between front and rear axle constructions it is possible to apply the suspension system simultaneously to front and rear axles.

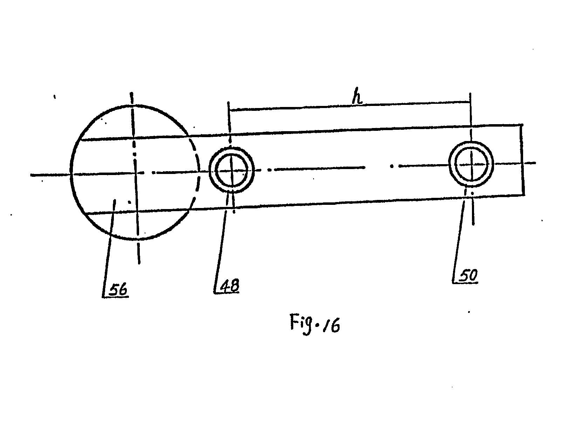

The positions of the two conic holes (48, 50) of the link stands are to be selected according to the characteristics of automobiles of different types. As shown in Fig. 14, both holes are located above the connecting part (56) of the link stands. This construction is suitable for use in automobiles with good roadibility. In Fig. 15 two connection lines, each between the center of one of the holes and the center of the respective connecting part (56) of the link stand, are almost perpendicular. This construction is suitable for use in automobiles where its disposition could hinder the engine or fuel tank. In Fig. 16 two holes are arranged at one and the same side of the connecting part (56) of the link stand. This construction is suitable for use in automobiles with special construction. It is also possible to use various other constructions of link stands to arrange relative positions of the two holes to avoid wheel interference. However, no matter how to arrange the disposition, two conditions are to be met: 1. The positions of the conic holes in each pair of link stands should ensure that both spring steel shafts are parallel. 2. The angle between the plane formed by both parallel steel shafts and the water level of the chassis should not be larger than 60°, that is, should not be in a range nearly vertical to the ground.

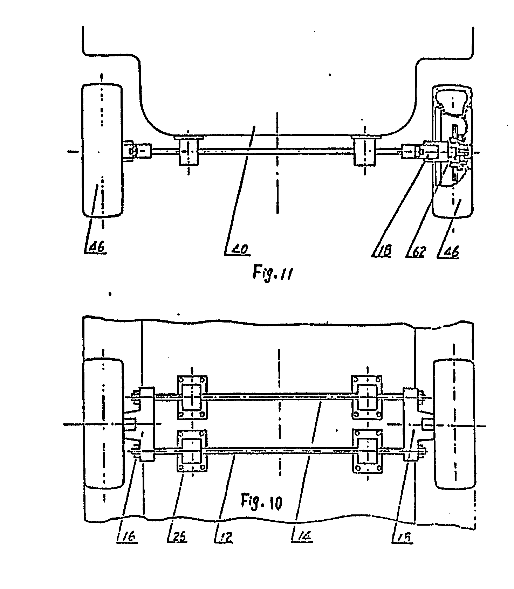

The connecting parts (56) of the link stands (16, 18) are to be designed and selected according to the specific construction and application case. In a front drive front axle suspension system its drive shaft (32) may be located below the frame structure (10) (as shown in Fig. 2), and may also be located above the frame structure (10) (as shown in Fig. 5 and Fig. 6), wherein the connecting parts of link stands have to have holes to connect the elevation shaft (30) or the drive shaft (32). For example, Fig. 12 and Fig. 13 are simple schemes of the link stand of a front axle where a hole (64) is provided for connecting with elevation shaft (30). In rear drive rear axle suspension systems (as shown in Fig. 8) the connecting part of the link stand has a hole for the drive shaft (44) to pass through. In rear axle passive suspension systems (as shown in Fig. 10 and 11) the connecting part of the link stand has a blind hole.

On frame type flexible axle suspension systems (Fig. 4, 5) there are other four supporting components, two for each steel shaft. Although they are disposed on respective steel shafts symmetrically to the longitudinal axis of the automobile (i.e. center line of front and rear wheel shafts), the distances of each pair of supporting components on both steel shafts may be equal or not equal. Vehicle frame (40) is directly fixed on these supporting components, and thus performs the task of connecting the suspension system and wheels (28, 46) with the vehicle frame (40).

Each of the four supporting components consists of a supporting stand (26), a hoop (24) and an elastic sleeve. The elastic sleeves (20, 21, 22, 23) have shock absorbing feature, at the same time function as hinges for guiding action. They are made of rubber or a synthetic rubber product, e.g. rubber (BR), polyurethane (UR), thermoplastic elastic material (SBS) etc.. They are directly put on appropriate location of the spring steel shafts (12, 14) and stuck together by adhesives or solidified on the respective spring steel shaft by a rubber vulcanizing process. The sleeves may have various forms, such as cylindrical form for the form of a bearing housing.

In addition, supporting stands (26) and spring steel shafts (12, 14) may be integrated by filling rubber between them, a method normally called "vulcanization", to ensure that it is elastic and strong.

Hoops (24) are used to bond the elastic sleeves firmly on the spring steel shafts. They may have various constructions. Ordinary clamping mechanism is capable to achieve this objective. Fig. 17, 18 and 19 show one of those ordinary hoop mechanisms, where the hoop (24) consists of two halves of steel parts, the form of an inner clamping surface suits the form of the elastic sleeves (20, 21, 22, 23), and the outer form suits the supporting stand (26). On both halves of the hoop there are holes with threades (58). The halves of the hoop are clamped together by bolts (52), thus elastic sleeves are tightly pressed onto the spring steel shafts (12, 14). By controlling the tightening force of the bolts it is possible to adjust the pressure of the elastic sleeves on the steel shafts. Sticking force of adhesives and pressure of hoops make the supporting components on the spring steel shafts unable to slide along the steel shafts under impact, vibration, braking or turning of the automobile. Obviously, making elastic sleeves longer will favour preventing above mentioned slide. Therefore, elastic sleeves for large automobiles should be longer, for small or mini-automobiles shorter, but it should not be less than 20 mm at the least.

Supporting stand (26) is fixed on hoop (24). It can be made integral with the hoop, or fixed on the hoop by means of a mechanical fastening method or a welding process. The supporting stand has four holes. By means of bolts or rivets it can be securely fastened to the frame (40). Finally it serves as a support for the chassis. The supporting stand may have a round, triangular, rectangular or square form according to the construction of the chassis, but normally rectangular form is preferred.

As described above, the distance between each pair of supporting components can be adjusted. The benefit is that guiding feature and stability of the suspension can be adjusted. Since the supporting components make suspension possess guiding feature, and at the same time make the steel shafts function like stabilizing rods, an increase in the distance will improve the stability of suspension, and a decrease in the distance will improve the guiding feature, but decrease stability. Therefore, by adjusting this distance it is possible to find an ideal combination of guiding and stabilizing features. In addition, by adjusting the distance it is possible to adjust the natural frequency of vibration of the elastic element-spring steel shaft, thus to improve smoothness of the automobile. Just as described above, the distance between the supporting stands of the two spring steel shafts may be different. The amount of difference may also be adjusted. The advantage is that to a certain degree it makes rigidity of suspension variable depending on vehicle's loading. In this way the natural frequency of the vehicle body changes very little. Smoothness of the vehicle drive is improved which is most important for buses and cars.

Generally speaking, the two supporting components of each steel shaft should be disposed at 1/6 H to 2/6 H and at 4/6 H to 5/6 H respectively. (H: distance between two wheels, see Fig. 4).

The supporting components of each steel shaft should be symmetric to a center line of distance between two wheels. For example, on spring steel shaft (12) there are two elastic sleeves (20) and (21). If (20) is placed at 1/6 H (H: distance between two wheels), then (21) should be placed at 5/6 H. Elastic sleeves (20) and (21) are symmetric to the center line of distance between the wheels.

However, the elastic sleeves (20 and 21) and (22 and 23) on the two respective spring steel shafts (12) and (14) of the same frame construction are not necessarily to be placed at the same distance, see Fig. 4. For example, elastic sleeves (20) and (21) on spring steel shaft (12) are placed at 2/6 H and 4/6 H (H: distance between two wheels) respectively, but elastic sleeves (22) and (23) on spring steel shaft (14) are placed at 1/6 H and 5/6 H respectively. Of course, from the point of view of vehicle body construction, loading condition and simplicity of maintenance, elastic sleeves (20) and (21) or (22) and (23) may be placed at the same distance between two wheels.

In summary from above, the frame type flexible axle suspension system is basically characterized by two parallel spring steel shafts (12, 14), ends of which pass through a pair of link stands (16, 18) respectively, which are perpendicular to the spring steel shafts. Combined together, they form a frame construction (10). The link stands are connected with elevation shafts or a drive shaft or wheel shafts. Elastic sleeves (20, 21, 22, 23) are fastened on the spring steel shafts (12 or 14) respectively by means of hoops, with which supporting stands (26) are connected which are fixed on the chassis, main beam or frame (40) of the automobile.

Following is a description of the principle of this frame type flexible axle suspension system.

Guiding function (see Fig. 4 and Fig. 5): When a wheel accepts a vertical force from the ground (in direction F), due to the fact that the spring steel shaft has elasticity, the wheel will swivel around the center A (or B) in direction N within a radius L (or I), thus guiding function is performed. Proper adjustment of the distance between A and B may change the distance from the wheel to A (or B), thus may adjust the radius within which the wheel can swivel in direction N to achieve the objective of adjusting guiding radius.

The link stands are rigidly connected with the spring steel shafts through conic holes and nuts. As a result, when a wheel accepts a longitudinal force in direction G in Fig. 4, (such as traction force and braking force), the wheel cannot be staggered in direction M, thus smoothness of drive is ensured.

In summary, it can be seen that this construction performs guiding function successfully and makes itself an independent suspension system.

Buffering function: When a wheel receives a ground impact, it transfers the impact to the elastic metal frame which is fixed on the supporting components connected with the vehicle body through rubber elastic sleeves. Since elastic deformation of the spring steel shafts absorbs the impact energy, the spring steel shafts as elastic elements performs the buffering function.

Stabilizing function: In order to improve smoothness of drive of the automobile, generally the rigidity of elastic elements in a suspension system should be properly reduced. However, when an automobile makes a turn, centrifugal force causes the automobile too large a slant that reduces its stability. Therefore, automobiles (mostly cars) with an independent suspension system are to have an additional spring steel shaft which, passing through the vehicle body, is fixed to the wheel shafts on both sides, thereby to a certain degree enhancing the rigidity of the outer suspension system during a turn, decreasing the slant of the vehicle body and improving stability. The frame type flexible axle suspension system of the present invention, however, does not need an additional stabilizing shaft device, because when the automobile makes a turn, the outer spring steel shaft deforms, thus affecting bending deformation of the whole of spring steel shafts and causing a spontaneous deformation of the inner spring steel shaft. Therefore, outer and inner sides are lowering most simultaneously during a turn and the slant angle decreases one half at the least, thus stability is ensured.

At the same time, in order to solve the problem of making wheels perpendicular to earth as much as possible, applying this frame type flexible axle suspension system to presently used sliding arm type or four connecting rod type (especially with movable spherical head at it turning link) front drive front axle suspension systems will give a more ideal effect (see Fig. 6).

This new frame type flexible axle suspension system has been tested on automobiles.

Experimental automobile is a small truck with one row of seats and 600 kg loading capacity. On the front axle of the automobile a front drive down supporting type flexible axle suspension system (as shown in Fig. 2), and on the rear axle a passive type suspension system (as shown in Fig. 11) was applied.

Spring steel 60Si$_2$Mn was selected for the spring steel shafts of both front and rear axles. Diameter of all steel shafts is 20 mm. The distance between both steel shafts of the front axle is approximately one third of the wheel diameter. The distance between both spring steel shafts of the rear axle is 250 mm.

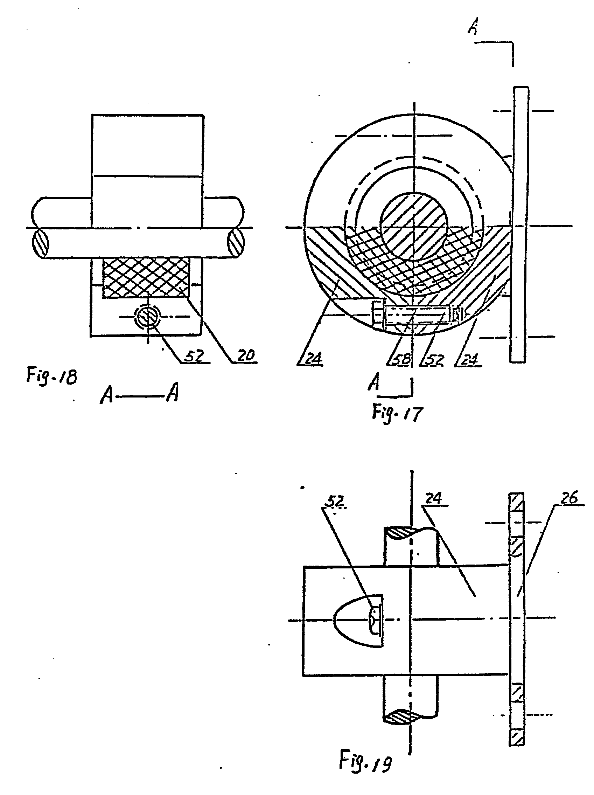

The elastic sleeves are made of rubber (BR). They have cylindrical form with an inner diameter of 18 mm, a thickness of 20 mm and a length of 40 mm. They are firmly stuck to steel shafts with 502 adhesive. The hoops are used to fasten the elastic sleeves onto the steel shafts as shown in Fig. 17, 19. They are welded on supporting stands and fixed on the main frame of the automobile by bolts which pass through four thread holes on the supporting stands. The elastic sleeves of the front and rear axles are placed at 2/9 H and 7/9 H (H: distance between two wheels), respectively.

In total, there are less than 200 parts in the experimental frame type flexible suspension system for front and rear axle. The construction is extremely simple. The automobile had been driving under full load condition and unexpected smoothness was achieved. Comfort is excellent. Sitting inside, people did not feel any bumping. The automobile showed flexible turning and good guiding feature.

Using this frame type flexible axle suspension system greatly simplifies the whole suspension mechanism, reduces the amount of parts an components, thus makes manufacturing easier and assemble simpler, reduces cost, facilitates maintenance and repair, decreases the vehicle body's weight, saves energy consumption accordingly and reduces the noise level caused by friction between parts.

## Claims

1. A suspension system for use at front and rear axles of automobiles, comprising at opposed side a link stand (16, 18) to be connected with an elevation shaft (30), a drive shaft (32, 44) or a wheel shaft (62), the opposed link stands being connected with each other via two parallel spring steel rods (12, 14) which themselves are connectable to the chassis (40) or main beam of the automobile by elastic sleeves (20–23) arranged symmetrically to the longitudinal axis of the automobile and fastened at the spring steel rods and being each clamped by a hoop (24) connected with a supporting stand (26) to be fixed at said chassis or main beam, characterized in that the spring steel rods are shafts (12, 14), the end portion of which for rigid connection pass through the respective link stands (16, 18) which are arranged perpendicularly to the spring steel shafts so as to form a frame (10).

2. The suspension system according to claim 1, characterized in that the material of said two spring steel shafts (12, 14) is spring steel of manganese steel series.

3. The suspension system according to claim 2, characterized in that said spring steel shafts (12, 14) are made of spring steel 65Mn.

4. The suspension system according to claim 2, characterized in that said spring steel shafts (12, 14) are made of spring steel 60Si$_2$Mn.

5. The suspension system according to any one of claims 1 to 4, characterized in that said both spring steel shafts (12, 14) are round, and diameter and material of both steel shafts are identical.

6. The suspension system according to any one of claims 1 to 5, characterized in that the distance h between said two spring steel shafts is not less than 1/5 of wheel diameter D, i.e. h≥1/5D.

7. The suspension system according to any one of claims 1 to 6, characterized in that the diameter of said spring steel shaft is not less than 8 mm.

8. The suspension system according to claim 7, characterized in that the diameter of said spring steel shaft is about 20 mm.

9. The suspension system according to any one of claims 1 to 8, characterized in that the ends of said spring steel shafts are machined as thread part with a conic part right next to the thread part.

10. The suspension system according to any one of claims 1 to 9, characterized in that said elastic sleeves (20) and (21) are fixed on spring steel shaft (12) and placed at 1/6 H to 2/6 H and at 4/6 H to 5/6 H respectively where H is the distance between two wheels, and sleeves (20) and (21) are symmetric to the center line of the distance between two wheels; while elastic sleeves (22) and (23) are fixed on spring steel shaft (14) and placed at 1/6 H to 2/6 H and 4/6 H to 5/6 H respectively where H is the distance between two wheels, and sleeves (22) and (23) are symmetric to the center line of the distance between two wheels.

11. The suspension system according to claim 10, characterized in that the contact length of each said elastic sleeve with said spring steel shaft may not be less than 20 mm.

12. The suspension system according to claim 10 or 11, characterized in that said elastic sleeves are made of rubber material (BR).

13. The suspension system according to claim 10 or 11, characterized in that said elastic sleeves are made of polyurethane rubber material (UR).

14. The suspension system according to claim 10 or 11, characterized in that said elastic sleeves are made of thermoplastic elastic material (SBS).

15. The suspension system according to any one of claims 10 to 14, characterized in that said elastic sleeves are stuck to said spring steel shaft by adhesives, and said hoops (24) are used to bond said elastic sleeves firmly on said spring steel shafts.

16. The suspension system according to claim 1, characterized in that on each said link stand (16 and 18) there are two conic holes (48, 50) for said spring steel shafts to pass through, the conicity of said hole matches with the conicity of the end part of said steel shaft, relative position of said two holes may be adjusted according to constructional needs, but the angle between the plane formed by said two parallel spring steel shafts and the water level of chassis should not be larger than 60°.

17. The suspension system according to claim 16, characterized in that the connecting part of said link stand (16 and 18) has a hole to connect an elevation shaft.

## Patentansprüche

1. Aufhängsystem zur Verwendung bei Vorder- und Hinterachsen von Kraftfahrzeugen, mit auf gegenüberliegenden Seiten je einer Gelenkstütze (16, 18), die mit einer aufwärts gerichteten Welle (30), einer Antriebswelle (32, 44) oder einer Radachse (62) zu verbinden ist, wobei die gegenüberliegenden Gelenkstützen miteinander über zwei parallele Federstahlstangen (12, 14) verbunden sind, die ihrerseits mit dem Chassis (40) oder Hauptträger des Kraftfahrzeugs über elastische Hülsen (20–23) verbunden sind, die symmetrisch zur Längsachse des Kraftfahrzeugs angeordnet und an den Federstahlstangen befestigt sind und die jeweils klemmend von einem Ring (24) gehalten sind, der mit einer am Chassis oder Hauptträger zu befestigenden Tragstütze (26) verbunden ist, dadurch gekennzeichnet, daß die Federstahlstangen Wellen (12, 14) sind, deren Endteile für eine starre Verbindung durch die jeweiligen Gelenkstützen (16, 18) hindurchverlaufen, die im rechten Winkel zu den Federstahlwellen angeordnet sind, um so einen Rahmen (10) zu bilden.

2. Aufhängsystem nach Anspruch 1, dadurch gekennzeichnet, daß das Material der beiden Federstahlwellen (12, 14) Federstahl aus Manganstahlserien ist.

3. Aufhängsystem nach Anspruch 2, dadurch gekennzeichnet, daß die Federstahlwellen (12, 14) aus Federstahl 65 Mn bestehen.

4. Aufhängsystem nach Anspruch 2, dadurch gekennzeichnet, daß die Federstahlwellen (12, 14) aus Federstahl 60 Si$_2$Mn bestehen.

5. Aufhängsystem nach einem der Ansprüche 1 bis 4, dadurch gekennzeichnet, daß die beiden Federstahlwellen (12, 14) rund sind, gleichen Durchmesser aufweisen und aus gleichem Material bestehen.

6. Aufhängsystem nach einem der Ansprüche 1 bis 5, dadurch gekennzeichnet, daß der Abstand h zwischen den beiden Federstahlwellen nicht weniger als 1/5 des Raddurchmessers D beträgt, also daß h≥1/5D.

7. Aufhängsystem nach einem der Ansprüche 1 bis 6, dadurch gekennzeichnet, daß der Durchmesser der Federstahlwellen nicht weniger als 8 mm beträgt.

8. Aufhängsystem nach Anspruch 7, dadurch gekennzeichnet, daß der Durchmesser der Federstahlwellen etwa 20 mm beträgt.

9. Aufhängsystem nach einem der Ansprüche 1 bis 8, dadurch gekennzeichnet, daß die Enden der Federstahlwellen als Gewindeteile mit einem konischen Teil, der sich an den Gewindeteil anschließt, gearbeitet sind.

10. Aufhängsystem nach einem der Ansprüche 1 bis 9, dadurch gekennzeichnet, daß die elastischen Hülsen (20) und (21) an der Federstahlwelle (12) befestigt sind und bei 1/6 H bis 2/6 H bzw. bei 4/6 H bis 5/6 H angeordnet sind, wobei H = der Abstand zwischen den beiden Rädern, und die Hülsen (20) und (21) symmetrisch zur Mittellinie des Abstands zwischen den beiden Rädern angeordnet sind; während die elastischen Hülsen (22) und (23) an der Federstahlwelle (14) befestigt sind und bei 1/6 H bis 2/6 H bzw. bei 4/6 H bis 5/6 H angeordnet sind, wobei H = der Abstand zwischen den beiden Rädern, und die Hülsen (22) und (23) symmetrisch zur Mittellinie des Abstands zwischen den beiden Rädern angeordnet sind.

11. Aufhängsystem nach Anspruch 10, dadurch gekennzeichnet, daß die Berührungslänge jeder elastischen Hülse mit der Federstahlwelle nicht weniger als 20 mm beträgt.

12. Aufhängsystem nach Anspruch 10 oder 11, dadurch gekennzeichnet, daß die elastischen Hülsen aus Gummimaterial (BR) bestehen.

13. Aufhängsystem nach Anspruch 10 oder 11, dadurch gekennzeichnet, daß die elastischen Hülsen aus Polyurethan-Gummi-Material (UR) bestehen.

14. Aufhängsystem nach Anspruch 10 oder 11, dadurch gekennzeichnet, daß die elastischen Hülsen aus thermoplastischem elastischem Material (SBS) bestehen.

15. Aufhängsystem nach einem der Ansprüche 10 bis 14, dadurch gekennzeichnet, daß die elastischen Hülsen mit einem Klebemittel an die Federstahlwelle angeklebt sind und daß die Ringe (24) dazu dienen, die elastischen Hülsen fest mit den Federstahlwellen zu verbinden.

16. Aufhängsystem nach Anspruch 1, dadurch gekennzeichnet, daß an jeder der Gelenkstützen (16 und 18) zwei konische Löcher (48, 50) zum Hindurchtreten der Federstahlwellen vorhanden sind, deren Konizität an die Konizität des Endteils der Stahlwelle angepaßt ist, wobei die relative Stellung der beiden Löcher entsprechend den konstruktiven Notwendigkeiten eingestellt sein kann, jedoch der Winkel zwischen der durch die beiden parallelen Federstahlwellen gebildeten Ebene und der Horizontalebene des Chassis nicht größer als 60° sein soll.

17. Aufhängsystem nach Anspruch 16, dadurch gekennzeichnet, daß der Verbindungsteil der Gelenkstütze (16 und 18) ein Loch aufweist, um eine aufwärts gerichtete Welle anzuschließen.

**Revendications**

1. Suspension destinée à être utilisée à des essieux avant et arrière d'automobiles, comprenant, sur ses côtés opposés, un support de liaison (16, 18) destiné à être raccordé à un arbre (30) de réglage en hauteur, à un arbre d'entraînement (32, 44) ou à un arbre de roue (62), les supports opposés de liaison étant raccordés l'un à l'autre par deux barres parallèles d'acier à ressort (12, 14) destinées elles-mêmes à être raccordées au châssis (40) ou à la poutre principale de l'automobile par des manchons élastiques (20–23) placés symétriquement par rapport à l'axe longitudinal de l'automobile, fixés aux barres d'acier à ressort et serrés chacun par un anneau (24) de fixation raccordé à un support (26) destiné à être fixé au châssis ou à la poutre principale, caractérisée en ce que les barres d'acier à ressort sont des arbres (12, 14) dont la partie d'extrémité destinée à être raccordée rigidement passe à travers les supports de liaison respectifs (16, 18) qui sont placés perpendiculairement aux arbres d'acier à ressort afin de former un cadre (10).

2. Suspension selon la revendication 1, caractérisée en ce que le matériau des deux arbres d'acier à ressort (12, 14) est formé d'acier à ressort de la série des aciers au manganèse.

3. Suspension selon la revendication 2, caractérisée en ce que les arbres d'acier à ressort (12, 14) sont formés d'acier à ressort 65Mn.

4. Suspension selon la revendication 2, caractérisée en ce que les arbres d'acier à ressort (12, 14) sont formés d'acier à ressort 60Si$_2$Mn.

5. Suspension selon l'une quelconque des revendications 1 à 4, caractérisée en ce que les deux arbres d'acier à ressort (12, 14) ont une section circulaire, et les diamètres et les matériaux des deux arbres sont identiques.

6. Suspension selon l'une quelconque des revendications 1 à 5, caractérisée en ce que la distance h comprise entre les deux arbres d'acier à ressort n'est pas inférieure à 1/5 fois le diamètre D des roues, c'est-à-dire h≥(1/5)D.

7. Suspension selon l'une quelconque des revendications 1 à 6, caractérisée en ce que le diamètre de l'arbre d'acier à ressort n'est pas inférieur à 8 mm.

8. Suspension selon la revendication 7, caractérisée en ce que le diamètre de l'arbre d'acier à ressort est d'environ 20 mm.

9. Suspension selon l'une quelconque des revendications 1 à 8, caractérisée en ce que les extrémités des arbres d'acier à ressort sont usinées sous forme filetée, avec une partie conique adjacente à la partie filetée.

10. Suspension selon l'une quelconque des revendications 1 à 9, caractérisée en ce que les manchons élastiques (20 et 21) sont fixés sur un arbre d'acier à ressort (12) et sont placés respectivement à des distances (1/6)H à (2/6)H et (4/6)H à (5/6)H, H étant la distance comprise entre les deux roues, et les manchons (20 et 21) sont symétriques par rapport à l'axe central passant entre les deux roues, alors que les manchons élastiques (22 et 23) fixés à l'arbre d'acier à ressort (14) sont placés à des distances (1/6)H à (2/6)H et (4/6)H à (5/6)H respectivement, H étant la distance séparant les deux roues, les manchons (22 et 23) étant symétriques par rapport à l'axe central passant entre les deux roues.

11. Suspension selon la revendication 10, caractérisée en ce que la longueur de contact de chaque manchon élastique avec l'arbre d'acier à ressort n'est pas inférieure à 20 mm.

12. Suspension selon la revendication 10 ou 11, caractérisée en ce que les manchons élastiques sont formés d'un matériau à base de caoutchouc (BR).

13. Suspension selon la revendication 10 ou 11, caractérisée en ce que les manchons élastiques sont formés d'un matériau à base de caoutchouc de polyuréthanne (UR).

14. Suspension selon la revendication 10 ou 11, caractérisée en ce que les manchons élastiques sont formés d'une matière élastique thermoplastique (SBS).

15. Suspension selon l'une quelconque des revendications 10 à 14, caractérisée en ce que les manchons élastiques sont collés à l'arbre d'acier à ressort par des adhésifs, et les anneaux (24) sont utilisées pour la fixation ferme des manchons élastiques de manière robuste sur les arbres d'acier à ressort.

16. Suspension selon la revendication 1, caractérisée en ce que deux trous coniques (48, 50) sont formés dans chaque support de liaison (16 et 18) et sont destinés au passage des arbres d'acier à ressort, la conicité des trous correspondant à la conicité de la partie d'extrémité de l'arbre d'acier à ressort, la position relative des deux trous pouvant être réglée en fonction des besoins de la construction, mais l'angle du plan formé par les deux barres parallèles d'acier à ressort et le niveau horizontal du châssis ne devant pas dépasser 60°.

17. Suspension selon la revendication 16, caractérisée en ce que la partie de raccordement du support de liaison (16 et 18) a un trou de raccordement à un arbre de réglage en hauteur.

Fig. 2

Fig. 1

Fig. 3

B—B

Fig 5

Fig 4

Fig.7

Fig.6

Fig.9

Fig.8

Fig. 11

Fig. 10

Fig. 13
A-A

Fig. 12

Fig.14  48  50  56

Fig 15  48  56  50

Fig.16

Fig. 18

52    20

A ———— A

Fig. 17

24    58  52  24

A

52    24    26

Fig. 19